# EUROPÄISCHE PATENTSCHRIFT

(11) **EP 2 576 123 B1**
(45) Veröffentlichungstag und Bekanntmachung des Hinweises auf die Patenterteilung: **09.11.2016**
(21) Anmeldenummer: 11724389.9
(22) Anmeldetag: 23.05.2011
(51) Int. Cl.: B23K 26/02, B23K 26/03, B23K 26/04

(54) **SCHWEISSVORRICHTUNG UND VERFAHREN ZUM SCHWEISSEN**
WELDING DEVICE AND METHOD FOR WELDING
DISPOSITIF DE SOUDAGE ET PROCÉDÉ DE SOUDAGE

(30) Priorität: 04.06.2010 DE 102010029694
(43) Veröffentlichungstag der Anmeldung: 10.04.2013
(73) Patentinhaber: Robert Bosch GmbH, 70442 Stuttgart (DE)
(72) Erfinder: BIRNESSER, Andreas, Josef, NL-5000 AM Tilburg (NL); GRAF, Thomas, 71154 Nufringen (DE)
(86) Internationale Anmeldenummer: PCT/EP2011/058366
(87) Internationale Veröffentlichungsnummer: WO 2011/151214

(56) Entgegenhaltungen:
- WO-A1-2008/070784
- WO-A2-99/14640
- US-A- 4 673 795

## Beschreibung

### Stand der Technik

Die Erfindung betrifft eine Schweißvorrichtung. Die Schweißvorrichtung weist eine Strahlenquelle auf, wobei die Strahlenquelle ausgebildet ist, elektromagnetische Strahlen zur Absorption in einem zu verschweißenden Objekt an einem Schweißort zu erzeugen. Die Schweißvorrichtung weist auch wenigstens einen Sensor auf, wobei der Sensor angeordnet und ausgebildet ist, beim Schweißen am Schweißort erzeugte elektromagnetische Prozessstrahlen zu erfassen. Der Sensor ist ausgebildet, in Abhängigkeit der erfassten Prozessstrahlen ein Sensorsignal zu erzeugen. Die Schweißvorrichtung weist auch eine mit dem Sensor und der Strahlenquelle verbundene Verarbeitungseinheit auf, wobei die Verarbeitungseinheit ausgebildet ist, in Abhängigkeit des Sensorsignals wenigstens einen Parameter der Strahlenerzeugung der Strahlenquelle zu steuern. Die Strahlenquelle ist beispielsweise durch einen Laser, insbesondere einen Kohlendioxid-Laser, einen YAG-Laser oder einen Halbleiter-Laser gebildet. Die Strahlenquelle ist bevorzugt ausgebildet, die elektromagnetischen Strahlen zur Absorption in dem zu verschweißenden Objekt derart zu erzeugen, dass das zu verschweißende Objekt mit einem anderen Objekt am Schweißort verbunden werden kann. Bei der vorbeschriebenen Schweissvorrichtung stellt sich das Problem, dass mit dieser nur grobe Prozessfehler detektiert werden können.

Aus der US 4 673 795 A ist ein Roboter mit einem Hochleistungslaser bekannt, welcher ein Glasfiberbündel zur Transmission einer von dem Laser fokussierten Ort emittierten Strahlung aufweist und wobei der Hochleistungslaser ausgebildet ist, einen von dem Hochleistungslaser erzeugten Laserstrahl in Abhängigkeit der emittierten Strahlung mittels eines geschlossenen Regelkreises zu regeln.

Aus der WO 2008 070784 A1 ist ein Monitorsystem zur Überwachung einer Schweißplasmastrahlung bekannt, bei dem ein Parameter eines Schweißprozesses in Abhängigkeit einer spektralen Intensität der Schweißplasmastrahlung mittels eines geschlossenen Regelkreises geregelt werden kann.

Aus der WO 1999 014 640 A2 ist ein Schweissgerät bekannt, bei dem mittels einer Fiberoptik vom Schweissort emittierte elektromagnetische Strahlen erfasst werden und als Eingangsparameter einer Fuzzy-Regelung ein Schweißergebnis beeinflussen können.

### Offenbarung der Erfindung

Die Schweißvorrichtung ist erfindungsgemäß ausgebildet, ein Strahlbündel der ausgesendeten Prozessstrahlen in einer Ebene quer zur Strahlenausbreitungsrichtung durch ein Fenster zu begrenzen, wobei das Fenster in der Ebene eine Längsabmessung aufweist, die größer ist als eine zur Längsabmessung senkrecht verlaufende Querabmessung des Fensters.

Mittels des Fensters können vorteilhaft Prozessstrahlen, welche von einem Keyhole-Bereich vom Schweißort ausgesendet werden, mittels des Sensors erfasst werden und von der Verarbeitungseinheit als Regeleingangsgröße zum Regeln des Schweißprozesses dienen. Das Schweissergebnis ist dadurch vorteilhaft qualitativ verbessert. Weiter vorteilhaft lässt sich das Schweissergebnis besser reproduzieren. Weiter vorteilhaft weisen so gefertigte Schweissergebnisse zueinander nur eine geringe Streuung, insbesondere nur geringe Unterschiede hinsichtlich Schweissnahttiefe und Schweissnahtfläche auf.

Der wenigstens eine Parameter der Strahlenerzeugung kann beispielsweise eine Strahlstärke, ein Strom zum Erzeugen der elektromagnetischen Strahlen, insbesondere Laserstrahlen, eine Strahlpulsdauer eines Strahlpulses einer gepulsten Laserstrahlung oder eine mittlere Strahlstärke einer gepulsten Laserstrahlung innerhalb eines Zeitintervalls sein.

In einer bevorzugten Ausführungsform weist die Schweißvorrichtung Strahlführungsmittel auf, welche ausgebildet sind, die vom Schweißort ausgesendeten Prozessstrahlen auf den Sensor zu leiten. Die Strahlführungsmittel können beispielsweise durch ein Glasfaserbündel ausgebildet sein, welches ausgebildet und angeordnet ist, die ausgesendeten Prozessstrahlen von dem Schweißort zu dem Sensor zu leiten. Durch die Strahlführungsmittel kann der Sensor vorteilhaft vor vom Schweißort ausgesendete Wärmestrahlung oder vor Funkenbildung geschützt sein.

In einer vorteilhaften Ausführungsform der Schweißvorrichtung ist im Strahlengang zwischen der Strahlenquelle und dem Schweißort ein Strahlteiler angeordnet. Der Strahlteiler ist ausgebildet, die von der Strahlenquelle ausgesendeten elektromagnetischen Strahlen zum Schweißort zu transmittieren und die vom Schweißort ausgesendeten Prozessstrahlen zu reflektieren und mindestens mittelbar auf den Sensor zu lenken. Der Strahlteiler kann beispielsweise durch einen halbdurchlässigen Spiegel gebildet sein. Der Strahlteiler bewirkt vorteilhaft, dass die Prozessstrahlen von dem Schweißort beabstandet empfangen werden können.

In einer bevorzugten Ausführungsform ist das Fenster durch eine Blende im Strahlengang der Prozessstrahlen gebildet. Die Blende kann beispielsweise zwischen dem Schweißort und dem Strahlteiler, zwischen dem Strahlteiler und dem Sensor, oder zwischen dem Strahlteiler und dem Strahlführungsmittel angeordnet sein.

In einer bevorzugten Ausführungsform der Schweißvorrichtung ist das Fenster durch ein insbesondere flexibel ausgebildetes Glasfaserbündel mit fensterförmigem Strahleneintrittsquerschnitt gebildet. Durch die Ausbildung des Fensters mittels des Glasfaserbündels mit fensterförmigem Strahleneintrittsquerschnitt kann vorteilhaft auf gesonderte Blenden im Strahlengang verzichtet werden, so dass weiter vorteilhaft zum Leiten der Prozessstrahlen mittels des Strahlführungsmittels zum Sensor ein voller Wirkungsquerschnitt des Strahlführungsmittels zum Leiten der Prozessstrahlen genutzt werden kann. Das Strahlführungsmittel kann beispielsweise eine Austrittsfläche quer zur Strahlrichtung aufweisen, welche eine andere Form aufweist als der Strahleneintrittsquerschnitt, beispielsweise eine runde Form.

In einer bevorzugten Ausführungsform weist das Fenster einen ovalen Querschnitt auf. Erfindungsgemäß wurde nämlich erkannt, dass die von einem Keyhole-Bereich ausgesendeten Prozessstrahlen, welche entgegengesetzt zur Strahleneinfallsrichtung der von der Strahlenquelle ausgesendeten elektromagnetischen Strahlen verlaufen, in einer Ebene senkrecht zur Strahleneinfallsrichtung der elektromagnetischen Strahlen, einen Flächenbereich mit im Wesentlichen gleicher Strahldichte in der Ebene durchsetzen, welcher eine ovale oder ellipsenförmige Form aufweist.

Wenn diese Prozessstrahlen mittels eines Glasfaserbündels bzw. eines Sensors mit einem runden Strahleneintrittsfenster erfasst werden, so wird nur ein Teil der Prozessstrahlen genutzt, um zur Regelung des Schweißvorgangs als Eingangsparameter empfangen zu werden.

Die Schweissvorrichtung kann beispielsweise zwei zueinander verschiedene Sensoren zum Erfassen der Prozessstrahlen aufweisen. Bevorzugt weisen die Sensoren zueinander verschiedene spektrale Empfindlichkeiten für die Prozessstrahlen auf. Dadurch können vorteilhaft weitere Parameter zum Regeln des Schweissprozesses gebildet sein.

Die Erfindung betrifft auch ein Verfahren zum Schweissen, insbesondere zum Regeln eines Schweissprozesses.

Bei dem Verfahren zum Regeln des Schweissens werden elektromagnetische Strahlen, insbesondere Laserstrahlen erzeugt und auf wenigstens ein Objekt an einem Schweissort gesendet, um am Schweissort wenigstens teilweise absorbiert zu werden und das Objekt an dem Schweissort zu erwärmen und wenigstens teilweise zu schmelzen. Bei dem Verfahren werden vom Schweissort emittierte elektromagnetische Prozessstrahlen erfasst und in Abhängigkeit der erfassten Prozessstrahlen wenigstens ein Parameter der Erzeugung der elektromagnetischen Strahlen geändert und so der Schweissprozess, insbesondere ein Ergebnis des Schweissprozesses beeinflusst. Bei dem Verfahren werden die Prozessstrahlen bevorzugt in einer Ebene quer zur Strahlenausbreitungsrichtung durch ein Fenster begrenzt, so dass nur von einem Keyhole am Schweissort ausgesendete Prozessstrahlen zum Beeinflussen des Schweissens erfasst werden.

Bevorzugt ist der Parameter eine Strahlstärke der elektromagnetischen Strahlen. In einer anderen Ausführungsform sind die elektromagnetischen Strahlen gepulst und der Parameter ist eine Pulsdauer eines Einzelpulses der gepulsten elektromagnetischen Strahlen.

Die Erfindung wird nun im Folgenden anhand von Figuren und weiteren Ausführungsbeispielen beschrieben. Weitere vorteilhafte Ausführungsformen der Schweißvorrichtung beziehungsweise des Verfahrens ergeben sich aus den in den abhängigen Ansprüchen genannten Merkmalen sowie aus den in der Beschreibung zu den Figuren genannten Merkmalen.
Figur 1 zeigt schematisch ein Ausführungsbeispiel für eine Schweißvorrichtung, welche ausgebildet ist, Prozessstrahlen, welche von einem Keyhole-Bereich ausgesendet werden, mittels eines ellipsenförmig ausgebildeten Fensters zu bewerten und zu einem Sensor weiterzuleiten;
Figur 2 zeigt ein Ausführungsbeispiel für zwei Diagramme, welche jeweils eine am Schweißort ausgesendete Prozessstrahlung in zueinander verschiedenen Erfassungsrichtungen darstellen;
Figur 3 zeigt ein Ausführungsbeispiel eines Flächenbereiches, welcher von einem Keyhole-Bereich an einem Schweißort ausgesendeter Prozessstrahlung durchsetzt wird, im Vergleich zu einem Strahleneintrittsfenster von einem herkömmlichen Strahlführungsmittel.

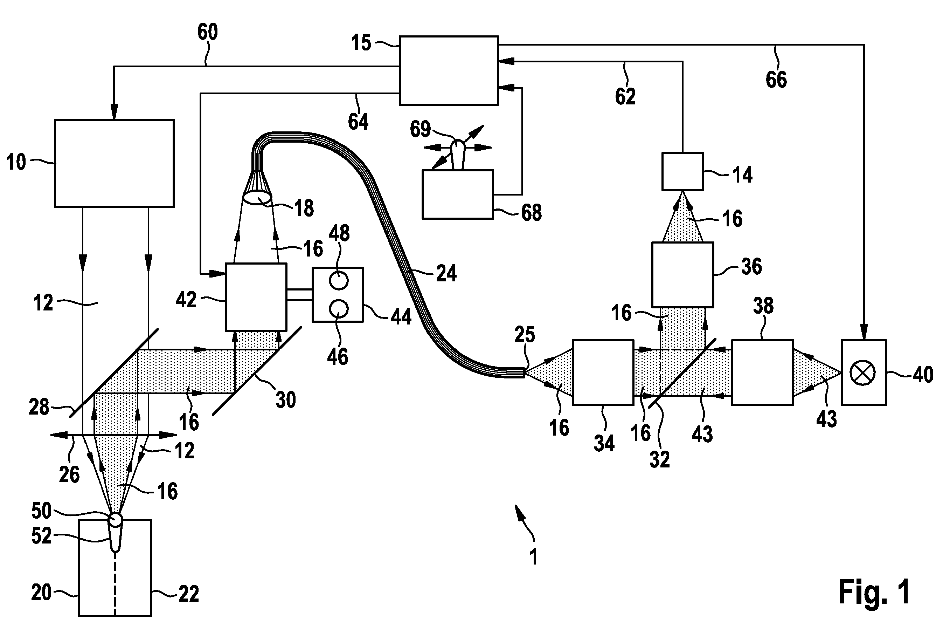

Figur 1 zeigt eine Schweißvorrichtung 1. Die Schweißvorrichtung 1 weist eine Strahlenquelle 10 auf. Die Strahlenquelle 10 ist in diesem Ausführungsbeispiel durch einen Laser gebildet. Die Strahlenquelle 10 ist ausgebildet, elektromagnetische Strahlen 12 zu erzeugen und auszusenden, welche an einem Schweißort eines zu verschweißenden Objekts 20 absorbiert werden können und dort wenigstens ein Material des zu verschweißenden Objekts zum Schmelzen bringen können. Die Schweißvorrichtung weist auch einen Sensor 14 auf, welcher ausgebildet ist, von dem Schweißort 50 ausgesendete Prozessstrahlen 16 zu erfassen und ein Sensorsignal in Abhängigkeit der erfassten Prozessstrahlen zu erzeugen, welches eine Strahlstärke der erfassten Prozessstrahlen repräsentiert.

Die Schweißvorrichtung 1 ist ausgebildet, die Prozessstrahlen 16 mittels eines Strahlteilers 28 und eines Strahlumlenkmittels, insbesondere eines Umlenkspiegels 30 sowie mittels einer Fokussiereinheit 42 auf ein Fenster 18 zu lenken. Das Fenster 18 ist durch eine Strahleneintrittsfläche eines Strahlführungsmittels 24 gebildet. Das Strahlführungsmittel 24 ist durch ein Glasfaserbündel gebildet, welches insbesondere flexibel ausgebildet ist und welches ausgebildet ist, die Prozessstrahlen 16 von dem Fenster 18 zu einem Ausgang 25 des Strahlführungsmittels 24 zu leiten. Der Ausgang 25 weist beispielsweise einen runden Ausgangsquerschnitt auf.

Der Strahlteiler 28 ist ausgebildet, die von der Strahlenquelle 10 erzeugten Strahlen 12 zu dem Schweißort 50 zu transmittieren, und von dem Schweißort 50 ausgesendete Prozessstrahlen 16, welche entgegengesetzt zu einer Strahlrichtung der Strahlen 12 verlaufen, zu reflektieren.

Im Strahlengang zwischen dem Schweissort 50 und dem Strahlteiler 28 ist ein Fokussiermittel, insbesondere eine Linse 26 angeordnet.

Die Fokussiereinheit 42 ist mit einer Stellvorrichtung 44 verbunden, welche ausgebildet ist, mittels eines Stellmotors 46 und eines Stellmotors 48 wenigstens einen Teil der Fokussiereinheit, welcher zur Strahlführung ausgebildet ist, wenigstens in einer Ebene quer zur Strahlrichtung der Prozessstrahlen 16 zu verschieben. Mittels der Stellvorrichtung 44 kann so die vom Schweißort 50 emittierte Prozessstrahlung 16 mittels eines Verschiebens der Strahlführungsmittel der Fokussiereinheit 42 in der Ebene so eingestellt werden, dass die Prozessstrahlen 16 genau auf das Fenster 18 abgebildet werden.

Die Schweißvorrichtung 1 weist eine Verarbeitungseinheit 15 auf, welche über eine Verbindungsleitung 64 mit der Fokussiereinheit 42 verbunden ist und so mittels Erzeugen entsprechender Steuersignale die Stellvorrichtung 44, insbesondere die Stellmotoren 46 und 48 zum Bewegen der Strahlführungsmittel der Fokussiereinheit 42 ansteuern kann.

Die Verarbeitungseinheit ist über eine Verbindungsleitung 66 ausgangsseitig mit einer Lichtquelle 40 verbunden. Die Lichtquelle 40 ist beispielsweise durch eine Glühlampe, eine Lumineszenzdiode oder eine Laserdiode gebildet.

Die Lichtquelle 40 ist ausgebildet, die Lichtstrahlen 43 zu erzeugen. Die Schweißvorrichtung 1 ist ausgebildet, die Lichtstrahlen 43 entgegengesetzt zur Richtung der Prozessstrahlen 16 durch das Strahlführungsmittel 24, durch die Fokussiereinheit 42 hindurch, weiter über den Umlenkspiegel 30 auf den Strahlteiler 28 zu lenken, sodass die Lichtstrahlen - in umgekehrter Richtung zum Strahlengang der Prozessstrahlen 16 - auf den Schweißort 50 fallen.

Die Verarbeitungseinheit ist eingangsseitig mit einer Benutzerschnittstelle 68 verbunden. Die Benutzerschnittstelle 68 weist ein stabförmig ausgebildetes Steuerelement 69 auf. Die Benutzerschnittstelle 68 ist ausgebildet, in Abhängigkeit einer Bewegung, insbesondere einer Schwenkbewegung des Steuerelements 69 ein Benutzerinteraktionssignal zu erzeugen und dieses ausgangsseitig an die Verarbeitungseinheit 15 zu senden.

Die Verarbeitungseinheit 15 ist ausgebildet, in Abhängigkeit des eingangsseitig empfangenen Benutzerinteraktionssignals - und so in Abhängigkeit der Schwenkbewegung des stabförmigen Steuerelements 69 - entsprechende Steuersignale zu erzeugen und diese über die Verbindungsleitung 64 an die Fokussiereinheit 42 zum Aktivieren der Stellmotoren 46 und 48 zu senden. Mittels des Steuerelements 69 der Benutzerschnittstelle 68 kann so der von der Lichtquelle 40 erzeugte Lichtstrahl 43 - umgekehrt zur Strahlrichtung der Prozessstrahlen 16 - mittels der Stellvorrichtung 44 auf den Schweißort 50 fokussiert werden. Die Schweißvorrichtung kann auf diese einfache Weise mittels des sichtbaren Lichtstrahls 43 kalibriert werden, sodass die Prozessstrahlen 16, welche am Strahlteiler 28 und an dem Strahllenkmittel 30 reflektiert werden und die Fokussiereinheit 42 durchlaufen, mittels des Strahlführungsmittels 24 zum Sensor 14 geleitet werden können. Dazu weist die Schweißvorrichtung 1 eine weitere Fokussiereinheit 34, eine weitere Fokussiereinheit 36 und eine weitere Fokussiereinheit 38 auf. Weiter weist die Schweißvorrichtung 1 einen Strahlteiler 32 auf, welcher ausgebildet und angeordnet ist, von der Fokussiereinheit 34 ausgangsseitig gesendete Prozessstrahlen 16 zu reflektieren und die reflektierten Prozessstrahlen 16 an die Fokussiereinheit 36 eingangsseitig weiterzuleiten. Die Fokussiereinheit 36 ist ausgebildet, die eingangsseitig empfangenen Prozessstrahlen 16 zum Sensor 14 weiterzuleiten und auf diesen abzubilden.

Die Fokussiereinheit 38 ist ausgebildet, die von der Lichtquelle 40 erzeugten Lichtstrahlen 43 zum Strahlteiler 32 zu senden, welcher ausgebildet ist, die Lichtstrahlen 43 zu transmittieren und so zur Fokussiereinheit 34 zu senden.

Die Fokussiereinheiten 34, 36, 38 und 42 weisen jeweils beispielsweise wenigstens eine Linse auf, welche ausgebildet ist, die Prozessstrahlen und/oder die Lichtstrahlen 43 zu bündeln und ausgangsseitig als Strahlbündel auszusenden.

Die Verarbeitungseinheit 15 ist ausgangsseitig über eine Verbindungsleitung 60 mit der Strahlenquelle 10 verbunden. Die Verarbeitungseinheit 15 ist ausgebildet, in Abhängigkeit eines über die Verbindungsleitung 62 eingangsseitig empfangenen Sensorsignals ein Steuersignal zum Aktivieren der Strahlenquelle 10 zu erzeugen und dieses ausgangsseitig an die Strahlenquelle 10 zu senden. Das Steuersignal zum Aktivieren der Strahlenquelle 10 kann beispielsweise eine Strahlintensität der Strahlen 12 repräsentieren. Mittels der so ausgebildeten Schweißvorrichtung 1 kann vorteilhaft mittels der Benutzerschnittstelle 68 und der Lichtquelle 40 die Fokussierung der Prozessstrahlen 16 auf den Sensor 14, insbesondere über das Fenster 18, beispielsweise vor Beginn eines Schweißprozesses oder bei einer Eingangskalibrierung nach Herstellung der Schweissvorrichtung - kalibriert werden. Mittels des Fensters 18 können vorteilhaft nur die von einem Keyhole-Bereich 52 ausgesendeten Prozessstrahlen 16 über das Strahlführungsmittel 24, die Fokussiereinheit 34, weiter über den Strahlteiler 32 und die Fokussiereinheit 36 auf den Sensor 14 gelenkt werden.

Das Sensorsignal des Sensors 14 repräsentiert so nur die von dem Keyhole-Bereich 52 ausgesendeten Prozessstrahlen der Prozessstrahlen 16. Die Verarbeitungseinheit 15 kann so nur in Abhängigkeit der von dem Keyhole-Bereich 52 ausgesendeten Prozessstrahlen den Schweißprozess zum Verbinden des Objekts 20 mit einem anderen Objekt 22 regeln.

Die Verarbeitungseinheit 15 ist beispielsweise durch einen Mikroprozessor, einen Mikrocontroller oder ein FPGA (FPGA = Field-Programmable-Gate-Array) gebildet.

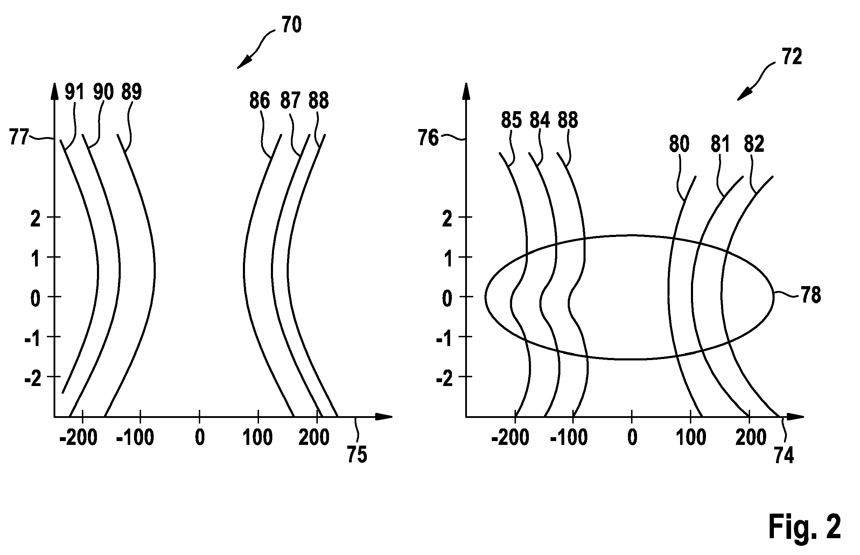

Figur 2 zeigt ein Diagramm 70 und ein Diagramm 72. Das Diagramm 70 weist eine Abszisse 75 und eine Ordinate 77 auf. Das Diagramm 72 weist eine Abszisse 74 und eine Ordinate 76 auf.

Die Abszisse 74 repräsentiert eine Verschiebung der Strahlführungsmittel der in Figur 1 dargestellten Fokussiereinheit 42 in der Ebene, welche von den Prozessstrahlen 16 durchsetzt wird, entlang einer ersten Translationsachse, die Abszisse 75 repräsentiert eine Verschiebung der Strahlführungsmittel der Fokussiereinheit 42 entlang einer zweiten Translationsachse, welche Senkrecht zur ersten Translationsachse in der Verschiebeebene verläuft.

Die Verschiebung ist auf den Abszissen 74 und 75 jeweils in Mikrometern aufgetragen. Die Ordinaten 76 und 77 repräsentieren jeweils eine Fokussierung der Strahlführungsmittel der Fokussiereinheit 42 entlang einer Translationsachse, welche in Richtung der Prozessstrahlen und somit senkrecht zu der ersten und der zweiten Translationsachse verläuft.

Das Diagramm 70 weist ein Kurvenpaar umfassend die Kurven 86 und 89 auf, welche jeweils dieselbe Strahldichte der vom Sensor 14 erfassten Prozessstrahlen repräsentiert. Das Diagramm 70 weist auch ein Kurvenpaar umfassend die Kurven 87 und 90 auf, welche jeweils eine vom Sensor 14 in Figur 1 erfasste Strahldichte repräsentieren, welche kleiner ist, als die durch die Kurven 86 und 90 repräsentierte Strahldichte.

Das Diagramm 70 weist auch ein Kurvenpaar umfassend die Kurven 88 und 91 auf, welche jeweils eine Strahldichte repräsentieren, die kleiner ist als die mittels der Kurven 87 und 90 repräsentierte Strahldichte. Sichtbar ist eine symmetrische Verteilung der Strahldichte entlang einer

Fokussierrichtung senkrecht zur ersten und zweiten Translationsachse.

Das Diagramm 72 weist ein Kurvenpaar umfassend die Kurven 80 und 83, ein weiteres Kurvenpaar umfassend die Kurven 81 und 84, und ein weiteres Kurvenpaar umfassend die Kurven 82 und 85 auf. Die Kurven 80 und 83 repräsentieren jeweils Fokussierorte mit derselben Strahldichte, beispielsweise erfasst von dem Sensor 14 in Figur 1. Die Kurven 81 und 84 repräsentieren jeweils Fokussierorte mit derselben Strahldichte. Die Kurven 82 und 85 repräsentieren jeweils Fokussierorte mit derselben Strahldichte, welche kleiner ist, als die durch die Kurven 81 und 84 repräsentiere Strahldichte. Dargestellt ist auch ein Bereich 78, welcher einen unsymmetrischen Bereich der Fokussierung umschließt. Der Bereich 78 repräsentiert eine Längserstreckung des in Figur 1 dargestellten Keyholes 52.

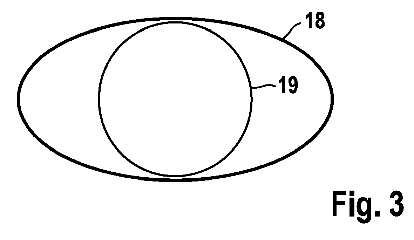

Figur 3 zeigt - schematisch - ein Ausführungsbeispiel für ein Fenster 18, welches eine Durchtrittsfläche für Prozessstrahlen aufweist, wobei die Durchtrittsfläche in einer Ebene senkrecht zu den Prozessstrahlen derart begrenzt ist, dass nur Prozessstrahlen durch das Fenster 18 hindurchtreten, welche von einem Keyhole, beispielsweise von dem in Figur 1 dargestellten Keyhole 52 ausgesendet werden. Die Durchtrittsfläche des Fensters 18 ist in diesem Ausführungsbeispiel ellipsenförmig ausgebildet. Dargestellt ist auch ein kreisförmig ausgebildeter Flächenbereich 19. Der kreisförmig ausgebildete Flächenbereich 19 ist beispielsweise eine Eintrittsfläche des in Figur 1 dargestellten Sensors 14 und/oder eine Austrittsfläche des Ausgangs 25 des Strahlführungsmittels 24. Das Fenster 18 ist beispielsweise die Strahleneintrittsfläche des in Figur 1 dargestellten Strahlführungsmittels 24.

Das in Figur 1 dargestellte Strahlführungsmittel weist beispielsweise eine Austrittsfläche auf, welche entsprechend der Eintrittsfläche des Sensors 14 geformt ist, insbesondere entsprechend dem in Figur 3 dargestellten Flächenbereich 19.

## Patentansprüche

1. Schweißvorrichtung (1) mit einer Strahlenquelle (10), wobei die Strahlenquelle (10) ausgebildet ist, elektromagnetische Strahlen (12) zur Absorption in einem zu verschweißenden Objekt (20, 22) an einem Schweißort (50) zu erzeugen, wobei die Schweißvorrichtung einen Sensor (14) aufweist, der angeordnet und ausgebildet ist, beim Schweissen am Schweissort (50) erzeugte elektromagnetische Prozessstrahlen (16) zu erfassen, wobei der Sensor (14) ausgebildet ist, in Abhängigkeit der erfassten Prozessstrahlen (16) ein Sensorsignal zu erzeugen und die Schweissvorrichtung (1) eine mit dem Sensor (14) und der Strahlenquelle (10) verbundene Verarbeitungseinheit (15) aufweist, welche ausgebildet ist, in Abhängigkeit des Sensorsignals wenigstens einen Parameter der Strahlenerzeugung der Strahlenquelle (10) zu steuern,
**dadurch gekennzeichnet, dass**
die Schweissvorrichtung (1) ausgebildet ist, ein Strahlbündel der ausgesendeten Prozessstrahlen (16) in einer Ebene quer zur Strahlenausbreitungsrichtung durch ein Fenster (18) zu begrenzen, wobei das Fenster (18) in der Ebene eine Längsabmessung aufweist, die größer ist als eine zur Längsabmessung senkrecht verlaufende Querabmessung des Fensters (18).

2. Schweissvorrichtung (1) nach Anspruch 1, wobei die Schweissvorrichtung (1) Strahlführungsmittel (24) aufweist, welche ausgebildet sind, die vom Schweissort (50) ausgesendeten Prozessstrahlen (16) auf den Sensor (14) zu leiten.

3. Schweissvorrichtung (1) nach Anspruch 2,
**dadurch gekennzeichnet, dass**
das Strahlführungsmittel (24) ein Glasfaserbündel aufweist, welches ausgebildet und angeordnet ist, die ausgesendeten Prozessstrahlen (16) von dem Schweissort (50) zu dem Sensor (14) zu leiten.

4. Schweissvorrichtung (1) nach einem der vorhergehenden Ansprüche,
**dadurch gekennzeichnet, dass**
im Strahlengang zwischen der Strahlenquelle (10) und dem Schweissort (50) ein Strahlteiler (28) angeordnet ist, welcher ausgebildet ist, die von der Strahlenquelle ausgesendeten elektromagnetischen Strahlen zum Schweissort zu transmittieren und die vom Schweissort ausgesendeten Prozessstrahlen zu reflektieren und mindestens mittelbar auf den Sensor zu lenken.

5. Schweissvorrichtung (1) nach Anspruch 4,
**dadurch gekennzeichnet, dass**
der Strahlteiler (28) ein halbdurchlässiger Spiegel ist.

6. Schweissvorrichtung (1) nach einem der vorhergehenden Ansprüche,
**dadurch gekennzeichnet, dass**
das Fenster (18) durch eine Blende im Strahlengang der Prozessstrahlen (16) gebildet ist.

7. Schweissvorrichtung (1) nach einem der vorhergehenden Ansprüche,
**dadurch gekennzeichnet, dass**
das Fenster (18)
durch das Glasfaserbündel (24) gebildet ist, wobei das Glasfaserbündel (24) einen fensterförmigem Strahleneingansquerschnitt aufweist.

8. Schweissvorrichtung (1) nach einem der vorhergehenden Ansprüche,
**dadurch gekennzeichnet, dass**
das Fenster (18) einen ovalen oder ellipsenförmigen Querschnitt aufweist.

9. Schweissvorrichtung (1) nach einem der vorhergehenden Ansprüche,
**dadurch gekennzeichnet, dass**
die Strahlenquelle ein Laser, insbesondere ein
Kohlendioxid-Laser, ein YAG-Laser oder ein Halbleiter-Laser ist.

10. Schweissvorrichtung (1) nach einem der vorhergehenden Ansprüche,
**dadurch gekennzeichnet, dass**
der Parameter ein Strom zum Erzeugen der elektromagnetischen Strahlen ist.

11. Schweissvorrichtung (1) nach einem der vorhergehenden Ansprüche,
**dadurch gekennzeichnet, dass**
der Parameter ein Strom zum Erzeugen der elektromagnetischen Strahlen, nämlich Laserstrahlen, eine Strahlpulsdauer eines Strahlpulses der gepulsten Laserstrahlung oder eine mittlere Strahlstärke der gepulsten Laserstrahlung innerhalb eines Zeitintervalls ist.

12. Verfahren zum Regeln eines Schweissprozesses, bei dem elektromagnetische Strahlen (12), insbesondere Laserstrahlen erzeugt werden und auf wenigstens ein Objekt an einem Schweissort (50) gesendet werden um am Schweissort (50) wenigstens teilweise absorbiert zu werden und das Objekt an dem Schweissort zu erwärmen und wenigstens teilweise zu schmelzen, wobei vom Schweissort (50) emittierte elektromagnetische Prozessstrahlen (16) erfasst werden und in Abhängigkeit der erfassten Prozessstrahlen (16) wenigstens ein Parameter der Erzeugung der elektromagnetischen Strahlen (12) geändert wird um so den Schweissprozess zu beeinflussen, **dadurch gekennzeichnet dass**, die Prozessstrahlen (16) in einer Ebene quer zur Strahlenausbreitungsrichtung durch ein Fenster (18) begrenzt werden, so dass nur von einem Keyhole am Schweissort ausgesendete Prozessstrahlen (16) zum Beeinflussen des Schweissprozesses erfasst werden.

13. Verfahren nach Anspruch 9, bei dem der Parameter eine Strahlstärke der elektromagnetischen Strahlen (12) oder eine Pulsdauer gepulster elektromagnetischer Strahlen (12) ist.

## Claims

1. Welding device (1) comprising a radiation source (10), the radiation source (10) being designed to generate electromagnetic radiation (12) for absorption in an object (20, 22) to be welded at a welding location (50), the welding device having a sensor (14) which is arranged and designed to detect electromagnetic process radiation (16) generated at the welding location (50) during the welding, the sensor (14) being designed to generate a sensor signal on the basis of the detected process radiation (16), and the welding device (1) having a processing unit (15) which is connected to the sensor (14) and the radiation source (10) and is designed to control at least one parameter relating to the radiation generation of the radiation source (10) on the basis of the sensor signal,
**characterized in that**
the welding device (1) is designed to limit a beam of the emitted process radiation (16) in a plane transverse to the radiation propagation direction by means of a window (18), wherein the window (18) has a longitudinal dimension, in the plane, which is greater than a transverse dimension of the window (18) running perpendicular to the longitudinal dimension.

2. Welding device (1) according to Claim 1, wherein the welding device (1) has radiation guiding means (24) which are designed to lead the process radiation (16) emitted from the welding location (50) to the sensor (14).

3. Welding device (1) according to Claim 2,
**characterized in that**
the radiation guiding means (24) comprise a glass-fibre bundle, which is designed and arranged to lead the emitted process radiation (16) from the welding location (50) to the sensor (14).

4. Welding device (1) according to one of the preceding claims,
**characterized in that**
in the beam path between the radiation source (10) and the welding location (50) there is arranged a beam splitter (28) which is designed to transmit the electromagnetic radiation emitted from the radiation source to the welding location and to reflect the process radiation emitted from the welding location and to deflect the same at least indirectly onto the sensor.

5. Welding device (1) according to Claim 4,
**characterized in that**
the beam splitter (28) is a semitransparent mirror.

6. Welding device (1) according to one of the preceding claims,
**characterized in that**
the window (18) is formed by an aperture stop in the beam path of the process radiation (16).

7. Welding device (1) according to one of the preceding claims,
**characterized in that**
the window (18) is formed by the glass-fibre bundle (24), wherein the glass-fibre bundle (24) has a window-like radiation input cross section.

8. Welding device (1) according to one of the preceding claims,
**characterized in that**
the window (18) has an oval or ellipsoidal cross section.

9. Welding device (1) according to one of the preceding claims,
**characterized in that**
the radiation source is a laser, in particular a carbon dioxide laser, a YAG laser or a semiconductor laser.

10. Welding device (1) according to one of the preceding claims,
**characterized in that**
the parameter is a current for generating the electromagnetic radiation.

11. Welding device (1) according to one of the preceding claims,
**characterized in that**
the parameter is a current for generating the electromagnetic radiation, specifically laser radiation, a radiation pulse length of a radiation pulse of the pulsed laser radiation or an average radiation intensity of the pulsed laser radiation within a time interval.

12. Method for controlling a welding process, in which electromagnetic radiation (12), in particular laser radiation, is generated and is transmitted onto at least one object at a welding location (50) in order to be at least partly absorbed at the welding location (50) and to heat and at least partly melt the object at the welding location, electromagnetic process radiation (16) emitted from the welding location (50) being detected and at least one parameter relating to generating the electromagnetic radiation (12) being changed on the basis of the detected process radiation (16), in order thus to influence the welding process,
**characterized in that**
the process radiation (16) is limited in a plane transverse to the radiation propagation direction by means of a window (18), so that only process radiation (16) emitted from a keyhole at the welding location is detected in order to influence the welding process.

13. Method according to Claim 9, in which the parameter is a radiation intensity of the electromagnetic radiation (12) or a pulse length of pulsed electromagnetic radiation (12).

## Revendications

1. Dispositif de soudage (1) comprenant une source de rayons (10), la source de rayons (10) étant configurée pour générer des rayons électromagnétiques (12) destinés à être absorbés dans un objet à souder (20, 22) en un emplacement de soudage (50), le dispositif de soudage possédant un capteur (14) qui est disposé et configuré pour détecter les rayons de procédé (16) électromagnétiques générés à l'emplacement de soudage (50) lors du soudage, le capteur (14) étant configuré pour générer un signal de capteur en fonction des rayons de procédé (16) détectés et le dispositif de soudage (1) possédant une unité de traitement (15) reliée au capteur (14) et à la source de rayons (10), laquelle est configurée pour commander au moins un paramètre de génération de rayons de la source de rayons (10) en fonction du signal de capteur, **caractérisé en ce que**
le dispositif de soudage (1) est configuré pour limiter par une fenêtre (18) un faisceau des rayons de procédé (16) émis dans un plan transversal par rapport au sens de propagation des rayons, la fenêtre (18) présentant dans le plan une dimension longitudinale qui est plus grande qu'une dimension transversale de la fenêtre (18) qui s'étend perpendiculairement à la dimension transversale.

2. Dispositif de soudage (1) selon la revendication 1, le dispositif de soudage (1) possédant des moyens de guidage des rayons (24) qui sont configurés pour guider sur le capteur (14) les rayons de procédé (16) émis depuis l'emplacement de soudage (50).

3. Dispositif de soudage (1) selon la revendication 2, **caractérisé en ce que** des moyens de guidage des rayons (24) possèdent un faisceau de fibres de verre qui est configuré et disposé pour guider vers le capteur (14) les rayons de procédé (16) émis depuis l'emplacement de soudage (50).

4. Dispositif de soudage (1) selon l'une des revendications précédentes, **caractérisé en ce qu'**un séparateur de rayons (28) est disposé dans le trajet des rayons entre la source de rayons (10) et l'emplacement de soudage (50), lequel est configuré pour transmettre vers l'emplacement de soudage les rayons électromagnétiques émis par la source de rayons et pour réfléchir les rayons de procédé émis par l'emplacement de soudage et les guider au moins indirectement sur le capteur.

5. Dispositif de soudage (1) selon la revendication 4, **caractérisé en ce que** le séparateur de rayons (28) est un miroir semi-transparent.

6. Dispositif de soudage (1) selon l'une des revendications précédentes, **caractérisé en ce que** la fenêtre (18) est formée par un obturateur dans le trajet de rayon des rayons de procédé (16).

7. Dispositif de soudage (1) selon l'une des revendications précédentes, **caractérisé en ce que** la fenêtre (18) est formée par le faisceau de fibres de verre (24), le faisceau de fibres de verre (24) présentant une section transversale d'entrée de rayons en forme de fenêtre.

8. Dispositif de soudage (1) selon l'une des revendications précédentes, **caractérisé en ce que** la fenêtre (18) présente une section transversale ovale ou elliptique.

9. Dispositif de soudage (1) selon l'une des revendications précédentes, **caractérisé en ce que** la source de rayons est un laser, notamment un laser au dioxyde de carbone, un laser YAG ou un laser à semiconducteur.

10. Dispositif de soudage (1) selon l'une des revendications précédentes, **caractérisé en ce que** le paramètre est un courant destiné à générer les rayons électromagnétiques.

11. Dispositif de soudage (1) selon l'une des revendications précédentes, **caractérisé en ce que** le paramètre est un courant destiné à générer les rayons électromagnétiques, à savoir des rayons laser, une durée d'impulsion de rayonnement d'une impulsion de rayon des rayons laser pulsés ou une intensité de rayon moyenne des rayons laser pulsés au sein d'un intervalle de temps.

12. Procédé de régulation d'un processus de soudage, selon lequel des rayons électromagnétiques (12), notamment des rayons lasers, sont générés et envoyés sur au moins un objet en un emplacement de soudage (50) en vue d'être au moins partiellement absorbés à l'emplacement de soudage (50) et pour chauffer l'objet à l'emplacement de soudage et le faire fondre au moins partiellement, des rayons de procédé (16) électromagnétiques émis depuis l'emplacement de soudage (50) étant détectés et au moins un paramètre de la génération des rayons électromagnétiques (12) étant modifié en fonction des rayons de procédé (16) détectés en vue d'influencer ainsi le processus de soudage, **caractérisé en ce que**
les rayons de procédé (16) dans un plan transversal par rapport au sens de propagation des rayons est délimité par une fenêtre (18), de sorte que seuls sont détectés les rayons de procédé (16) envoyés à l'emplacement de soudage depuis un trou de serrure en vue d'influencer le processus de soudage.

13. Procédé selon la revendication 9, selon lequel le paramètre est une intensité de rayon des rayons électromagnétiques (12) ou une durée d'impulsion de rayons électromagnétiques (12) pulsés.
